# EUROPEAN PATENT SPECIFICATION

(11) **EP 0 436 972 B1**
(45) Date of publication and mention of the grant of the patent: **08.02.1995**
(21) Application number: 90202966.9
(22) Date of filing: 08.11.1990
(51) Int. Cl.: B60P 1/64

(54) **Trailer and container adapted therefor**
Anhänger und geeigneter Behälter
Remarque et conteneur adapté

(30) Priority: 08.11.1989 NL 8902768
(43) Date of publication of application: 17.07.1991
(73) Proprietor: Contrailer Holland B.V., NL-7547 SK Enschede (NL)
(72) Inventor: Contrailer Holland B.V., NL-7547 SK Enschede (NL)
(74) Representative: Bruin, Cornelis Willem

(56) References cited:
- DE-A- 3 426 310
- GB-A- 2 009 712
- US-A- 2 426 889
- US-A- 3 905 498

## Description

The invention lies in the field of transporting objects which have a weight such that they do not allow of transportation by simple means.

The invention relates to a trailer, comprising lifting means for gripping an object to be transported, for example a container or liquid tank, which lifting means can be moved between two positions by drive means in which first position the object standing on the ground can be gripped, and in which second position the gripped object is lifted up to a raised position, wherein the object is only in gripping contact with the trailer for drivable transporting thereby,
said lifting means comprising support arms which can swing round a common transverse pivot centre line and which are provided on their free ends with first coupling means for gripping an object for transporting on both sides thereof.

Such a trailer is known from US-A-3 905 498, which document discloses a combination of a wagon, loading equipment on one end of the wagon, and a container, which is lifted on and off the wagon or otherwise supported by the loading equipment.

This professional truck is known for transporting large containers. For relatively small users, such as small contractors with a number of small jobs, camping sites, recreation areas, hotels, old people's homes, garden centres etc., large, professional container transport is not practical.

The present invention is based on the insight that the said group of users, which are mentioned here only by way of example, has need of an easily transportable container in which can be deposited a load of in total a maximum of 1,000 kg for example, which container can be transported simply by a relatively cheap means of transport. This need not therefore be a professional truck specially equipped for container transport, but according to the invention should be a trailer specially equipped for container transport.

The said combination according to the invention offers the user the possibility of purchasing a trailer and if desired a number of containers. One container can for example be set down at a dumping site and the trailer can be used in the meantime to transport other containers.

With reference to the above it will be apparent that the invention is not only aimed at transporting bulky waste. Other uses can also be considered, for instance sorted refuse, transporting and distributing semi-manufactures by industrial companies, transporting barrels for the processing industry, etc.

With regard to the above, the invention provides a trailer characterized in that the support arms are coupled by a generally U-shaped bracket which is oriented upward in the first position and in the second position assumes a substantially horizontal position, wherein the drive means grip onto the free end zone of the bracket by means of a pulling member.

In a practical embodiment the trailer has the feature that the first coupling means of each support arm comprise a U-shaped clasp for co-action with two protrusions arranged on both sides of an object for transporting.

In a particular embodiment the trailer has the special feature that the drive means comprise a motor.

Preference is given however to an embodiment in which the drive means comprise manual operating means such as a winch. Such an embodiment can be considerably cheaper. It will however be apparent that the design of the trailer must then be such that the lifting height of an object for transporting remains limited, since otherwise the time required to carry an object from the first to the second position could be impractically long.

In the context of the foregoing use can also be made of spring means co-acting with the lifting means, the resilience of which acts in the lifting direction.

The spring means can for instance comprise at least one gas spring.

For stable positioning, use is preferably made of at least one locking element which can be coupled by means of second coupling means to the object for transporting.

In this embodiment the trailer can display the feature that the locking element is a pivoting locking arm which grips the object at an interval from the lifting means such that any swinging or tilting of the object relative to the lifting means is blocked.

The second coupling means can also comprise a U-shaped bracket for co-action with a protrusion arranged on the object.

A preferred embodiment has the feature that the locking arm co-acts with the lifting means via a gripped object such that the object is prevented from swinging or tilting in all positions of the lifting means and, in the said first and second positions of the lifting means, the object respectively stands on the ground and is situated in its transporting position. When the locking arm is uncoupled in any random position of the lifting means, except for those positions lying in the vicinity of the first position, the object gripped by the lifting means can be tipped or tilted. In the case of a container skip, for instance, the contents can then be emptied out in a simple manner.

Use is preferably made of stabilizing legs to be placed on the ground and which are fixed to the trailer on that side where an object is situated in the first position of the lifting means. These stabilizing legs support the trailer when a loaded container is moved for instance from the second to the first position, in which case the tow hook of the automobile would otherwise be subjected to a relatively heavy upward oriented load.

The invention further relates in general to an object for transporting intended for co-action with a trailer as described above. In particular this can be a container for a trailer according to the invention, comprising two lifting protrusions arranged at corresponding positions on both sides, whereby the lifting protrusions are embodied as pins broadened at their ends. Such a container is characterized by at least one locking protrusion located at a position to interact with a locking element provided at the trailer, which locking protrusion is embodied as a broadened pin.

The container can consist of known construction materials, such as galvanized and coated steel plate or the like. In order to limit the weight of the container as far as possible for the relatively small-scale applications to which the invention relates, the embodiment is recommended wherein the container consists at least partially of plastic.

The plastic is preferably reinforced.

In order to maintain the most favourable possible ratio between strength and weight, the container can be strengthened locally with ribs.

In this case the lifting protrusions can be arranged on strengthening ribs.

An optional locking protrusion can also be arranged on a strengthening rib.

In a particular embodiment the container has a pivoting flap. Such a flap can form one of the standing walls of a container. Particularly in this case the container preferably displays the feature that the flap can be fixed in its closed position. The fixing can comprise for instance two pivoting hooks co-acting with coupling eyes.

The invention also and more particularly relates to the combination of a trailer and a container or other object for transporting, as specified above.

The invention will now be elucidated with reference to the annexed drawing, wherein:
Figure 1 shows a perspective view of the combination of a trailer and a container skip in the situation where the container skip is standing on the ground and is already coupled to the trailer; and
Figure 2 shows a perspective view from another angle of the combination shown in figure 1 in the situation where the container skip is lifted and the combination is ready for transport.

In both figures the same components are always designated with the same reference numerals.

A trailer 1 comprises a frame 2, which is carried on wheels 4 via suspension means 3. The frame further comprises a shaft 5 and arranged on the shaft an auxiliary wheel 6 that is movable up and down in the generally known manner.

Arranged on the frame 2 on both sides is an auxiliary frame 7 which carries a support arm 8 pivotable round a pivot shaft 9. On the free end of each support arm 8 is located a U-shaped bracket for co-action with a mushroom-shaped protrusion 11 fixed to a container skip 12.

A more or less U-shaped bracket 13 is attached to the support arms 8. Braces 14 are arranged as stiffening means between the bracket 13 and the arms 8. Gas springs 15 are placed between these braces 14 and the frame 2.

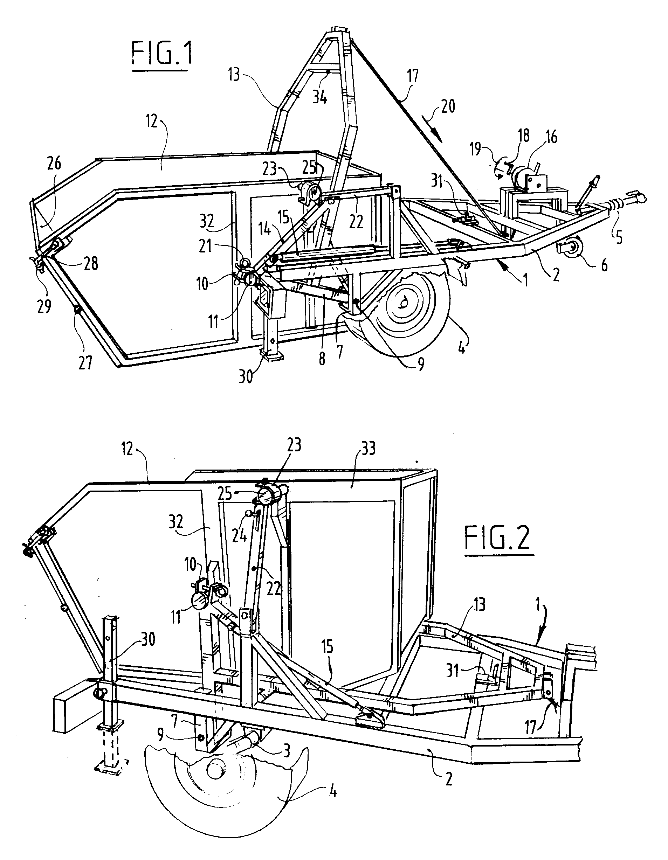

A hand winch 16 is arranged on the shaft 5. This winch is of per se known construction and serves to wind onto a drum a cable 17 which is connected to the top end of the bracket 13 shown in figure 1. By operating the winch handle 18 according to arrow 19 a tensile force in the direction of the arrow 20 is exerted on the cable 17. A ratchet mechanism (not drawn) in the hand winch 16 ensures locking in each position reached.

In the situation shown in figure 1 the U-shaped clasps 10 are brought into co-action with the lifting protrusions 11. The relative position of both is locked by means of a locking pin 21. In this manner the container skip 12 is pivotally coupled to the support arms 8. When the handle 18 is further operated the bracket 13 is carried forward and downward to an increasing extent in the direction of the shaft 5, until the bracket 13 has reached the horizontal position on frame 2 as shown in figure 2. In this position the support arms 8 stand substantially vertically and the container skip 12 is completely clear of the ground so that the trailer 1 can travel.

A pivoting locking arm 22 having on its end a U-shaped clasp 23 with a spring loaded locking pin with operating handle 24 co-acts for position locking of the container skip 12 with a more or less mushroom-shaped locking protrusion 25 arranged on the container skip 12 for this purpose. With reference to the figures it will be apparent that, in the transport position shown in figure 2, the locking arm 22 blocks any swinging movement of the container skip 12 around the lifting protrusions 11, so that a stable position of the combination 1, 12 is assured during travel.

From the position shown in figure 2, or a lowered position of the container skip 12, thus between the positions shown in figures 1 and 2, the locking by the locking arm 22 can if desired be released. The container skip 12 can then swing round the lifting protrusions 11. To facilitate this tipping movement the container skip 12 is embodied with a slanting flap 26 which can pivot by means of bottom hinge 27 and is blockable in the shown closed position by pivoting hooks 28 and eyes 29.

In order to be able to lift a loaded container 12 without an undesirably great force being exerted on shaft 5 and thereby on the tow bar of the automobile, and to further stability as far as possible, stabilizing legs 30 are arranged at the rear of frame 2 which in figure 1 30 rest on the ground in a locked bottom position and in the situation according to figure 2, the transporting position, are retracted into a locked position.

In the situation shown in figure 2 the cable 17 is held under tension by the ratchet mechanism of the winch 16. Nevertheless, for the sake of safety, a locking pin 31 is arranged on the frame 2 which, in the situation shown in figure 2, is pushed into a corresponding hole 34 in frame 2. Attention is drawn to the fact that the lifting protrusions 11 are situated at a distance from the top side of the container 12. They are hereby at a limited distance to the centre of gravity of container 12, also in loaded state, whereby the tilting of the container 12 as described is possible with relatively little effort.

The container 12 comprises vertical strengthening ribs 32 to which the lifting protrusions 11 are fixed. The top edge of container 12 is likewise embodied as a strengthening rib 33, to which is fixed the locking protrusion 25.

Attention is drawn to the fact that, if desired, use could also be made of two locking protrusions 25 with associated arm 22. The force exerted on the arm 22 is however generally not so great that the use of two arms, one on each side, is necessary.

## Claims

1. Trailer (1), comprising lifting means (8,10,13,14, 15) for gripping an object to be transported, for example a container or liquid tank, which lifting means (8,10,13,14,15) can be moved between two positions by drive means (16,17,18) in which first position the object standing on the ground can be gripped, and in which second position the gripped object is lifted up to a raised position, wherein the object is only in gripping contact with the trailer (1) for drivable transporting thereby,
said lifting means (8,10,13,14,15) comprising support arms (8) which can swing round a common transverse pivot centre line and which are provided on their free ends with first coupling means (10) for gripping an object for transporting on both sides thereof,
**characterized in that** the support arms (8) are coupled by a generally U-shaped bracket (13) which is oriented upward in the first position and in the second position assumes a substantially horizontal position, wherein the drive means (16,17,18) grip onto the free end zone of the bracket by means of a pulling member (17).

2. Trailer (1) as claimed in claim 1, **characterized in that** the first coupling means of each support arm comprise a U-shaped clasp (10) for co-action with two protrusions (11) arranged on both sides of an object (12) for transporting.

3. Trailer (1) as claimed in claim 1, **characterized in that** the drive means comprise a motor.

4. Trailer (1) as claimed in claim 1, **characterized in that** the drive means comprise manually operated means, such as a winch (16,18).

5. Trailer (1) as claimed in claim 1, **characterized by** spring means (15) co-acting with the lifting means (14) the resilience of which acts in the lifting direction.

6. Trailer (1) as claimed in claim 5, **characterized in that** the spring means comprise at least one gas spring (15).

7. Trailer (1) as claimed in claim 1, **characterized by** at least one locking element (22) couplable by means of second coupling means (23,24) to an object for transporting.

8. Trailer (1) as claimed in claims 1 and 5, **characterized in that** the locking element is a pivoting locking arm (22) which grips on the object at an interval from the lifting means (10) such that swinging or tilting of the object (12) relative to the lifting means (10) is blocked.

9. Trailer (1) as claimed in claim 7, **characterized in that** the second coupling means comprise a U-shaped clasp (23) for co-action with a protrusion (25) arranged on the object.

10. Trailer (1) as claimed in claim 7, **characterized in that** the locking arm (22) co-acts with the lifting means (8,10,13,14,15) via a gripped object (12) such that the object (12) is prevented from swinging or tilting in all positions of the lifting means (8,10,13,14,15) and that in the said first and second positions of the lifting means (8,10,13,14,15) the object (12) respectively stands on the ground and is situated in its transporting position.

11. Container (12) for a trailer (1) as claimed in any of the claims 1-10, comprising two lifting protrusions (11) arranged at corresponding positions on both sides, whereby the lifting protrusions (11) are embodied as pins broadened at their ends, **characterized by** at least one locking protrusion (25) located at a position to interact with a locking element provided at the trailer (1), which locking protrusion (25) is embodied as a broadened pin.

12. Container (12) as claimed in claim 11, **characterized in that** the container (12) consists at least partially of plastic.

13. Container (12) as claimed in claim 12, **characterized in that** the plastic is reinforced.

14. Container (12) as claimed in claim 11, said container (12) being locally strengthened by ribs (32,33), **characterized in that** the lifting protrusions (11) are arranged on strengthening ribs (32).

15. Container (12) as claimed in claim 11, **characterized in that** the locking protrusion (25) is arranged on a strengthening rib (33).

16. Combination of a trailer (1) and a container (12) as claimed respectively in any of the claims 1-10 and any of the claims 11-15.

## Patentansprüche

1. Anhänger (1), mit
Hebemittel (8, 10, 13, 14, 15) zum Ergreifen eines zu transportierenden Objektes, zum Beispiel eines Behälters oder eines Flüssigkeitstankes, wobei das Hebemittel (8, 10, 13, 14, 15) durch Antriebsmittel (16, 17, 18) zwischen zwei Positionen bewegt werden kann, in welcher ersten Position das auf dem Boden stehende Objekt ergriffen werden kann und in welcher zweiten Position das ergriffene Objekt zu einer erhöhten Position angehoben ist, das Objekt nur in Greifkontakt mit dem Anhänger (1) zum antreibbaren Transportieren dadurch steht,
wobei das Hebemittel (8, 10, 13, 14, 15) Tragarme (8) aufweist, die um eine gemeinsame, quer gerichtete Schwenkmittellinie schwingen können und die an ihren freien Enden mit ersten Verbindungsmittel (10) zum Ergreifen eines Objektes an beiden Seiten davon zum Transportieren versehen sind,
dadurch gekennzeichnet, daß die Tragarme (8) durch einen im allgemeinen U-förmigen Bügel (13) verbunden sind, der in der ersten Position nach oben orientiert ist und in der zweiten Position eine im wesentlichen horizontale position annimmt, wobei das Antriebsmittel (16, 17, 18) an die freie Endzone des Bügel mittels eines Zugteiles (17) angreift.

2. Anhänger (1) nach Anspruch 1, dadurch gekennzeichnet, daß das erste Verbindungsmittel eines jeden Tragarmes eine U-förmige Klammer (10) zum Zusammenwirken mit zwei Vorsprüngen (11) aufweist, die an beiden Seiten eines Objektes (12) zum Transportieren angeordnet sind.

3. Anhänger (1) nach Anspruch 1, dadurch gekennzeichnet, daß die Antriebsmittel einen Motor aufweisen.

4. Anhänger (1) nach Anspruch 1, dadurch gekennzeichnet, daß die Antriebsmittel ein manuell betätigtes Mittel wie eine Winde (16, 18) aufweisen.

5. Anhänger (1) nach Anspruch 1, gekennzeichnet durch Federmittel (15), das zusammen mit dem Hebemittel (14) wirkt, wobei dessen Spannung in die Heberichtung wirkt.

6. Anhänger (1) nach Anspruch 5, dadurch gekennzeichnet, daß das Federmittel mindestens eine Gasfeder (15) aufweist.

7. Anhänger (1) nach Anspruch 1, gekennzeichnet durch mindestens ein Verriegelungselement (22), das mit einem Objekt zum Transportieren mittels einem zweiten Verbindungsmittel (23, 24) verbindbar ist.

8. Anhänger (1) nach Anspruch 1 und 5, dadurch gekennzeichnet, daß das Verriegelungselement ein schwenkender Verriegelungsarm (22) ist, der an das Objekt an einem Abstand von dem Hebemittel (10) so angreift, daß Schwingen oder Neigen des Objektes (12) relativ zu dem Hebemittel (10) blockiert ist.

9. Anhänger (1) nach Anspruch 7, dadurch gekennzeichnet, daß die zweiten Verbindungsmittel eine U-förmige Klammer 23 zum Zusammenwirken mit einem auf dem Objekt angeordneten Vorsprung (25) aufweisen.

10. Anhänger (1) nach Anspruch 7, dadurch gekennzeichnet, daß der Verriegelungsarm (22) mit dem Hebemittel (8, 10, 13, 14, 15) über das ergriffene Objekt (12) so zusammenwirkt, daß das Objekt daran gehindert wird, in allen Positionen des Hebemittels (8, 10, 13, 14, 15) zu schwenken oder sich zu neigen, und daß in der ersten und zweiten Position des Hebemittels (8, 10, 13, 14, 15) das Objekt (12) auf dem Boden steht bzw. in seiner Transportposition angeordnet ist.

11. Behälter (12) für einen Anhänger (1) nach einem der Ansprüche 1 bis 10, mit zwei Hebevorsprüngen (11), die an entsprechenden Positionen auf beiden Seiten angeordnet sind, wobei die Hebepositionen (11) als Stifte ausgebildet sind, die an ihren Enden verbreitert sind, gekennzeichnet durch mindestens einen Verriegelungsvorsprung (25), der an einer Position zum Wechselwirken mit einem Verriegelungselement angeordnet ist, das an dem Anhänger (1) vorgesehen ist, welcher Verriegelungsvorsprung (25) als ein verbreiteter Stift ausgeführt ist.

12. Behälter (12) nach Anspruch 11, dadurch gekennzeichnet, daß der Behälter (12) mindestens teilweise aus Kunststoff besteht.

13. Behälter (12) nach Anspruch 12, dadurch gekennzeichnet, daß der Kunststoff verstärkt ist.

14. Behälter (12) nach Anspruch 11, wobei der Behälter (12) lokal durch Rippen (32, 33) verstärkt ist, dadurch gekennzeichnet, daß die Hebevorsprünge (11) auf den Verstärkungsrippen (32) angeordnet sind.

15. Behälter (12) nach Anspruch 11, dadurch gekennzeichnet, daß der Verriegelungsvorsprung (25) auf einer Verstärkungsrippe (33) angeordnet ist.

16. Kombination eines Anhänger (1) und eines Behälters (12), wie sie in einem der Ansprüche 1 bis 10 bzw. einem der Ansprüche 11 bis 15 beansprucht sind.

## Revendications

1. Remorque (1) comportant des moyens de levage (8,10,13,14,15) pour agripper un objet à transporter, par exemple un conteneur ou un réservoir de liquide, lesquels moyens de levage (8,10,13,14,15) peuvent être déplacés entre deux positions par des moyens d'entraînement (16,17,18), une première position où l'objet repose sur le sol et peut être agrippé, et une seconde position où l'objet agrippé est soulevé jusqu'à une position surélevée, dans laquelle l'objet est uniquement en contact d'agrippement avec la remorque (1) pour être transporté avec elle,
lesdits moyens de levage (8,10,13,14,15) comprenant des bras-supports (8) qui peuvent pivoter autour d'un axe central transversal commun de pivotement et qui sont équipés à leurs extrémités libres de premiers moyens d'accouplement (10) pour agripper un objet sur ses deux côtés afin de le transporter,
caractérisée en ce que les bras-supports (8) sont accouplés par un attelage (13) ayant généralement la forme d'un U qui est orienté vers le haut dans la première position et qui, dans la seconde position, prend sensiblement une position horizontale, dans laquelle les moyens d'entraînement (16,17,18) agrippent la zone d'extrémité libre de l'attelage au moyen d'un élément de tirage (17).

2. Remorque (1) selon la revendication 1, caractérisée en ce que les premiers moyens d'accouplement de chaque bras-support comprennent un crochet en forme de U (10) pour coopérer avec deux protubérances (11) placées des deux côtés d'un objet (12) pour le transporter.

3. Remorque (1) selon la revendication 1, caractérisée en ce que les moyens d'entraînement comprennent un moteur.

4. Remorque (1) selon la revendication 1, caractérisée en ce que les moyens d'entraînement comprennent des moyens à commande manuelle, tels qu'un treuil (16,18).

5. Remorque (1) selon la revendication 1, caractérisée par des moyens à ressort (15) coopérant avec les moyens de levage (14), l'élasticité des moyens à ressort agissant dans la direction de levage.

6. Remorque (1) selon la revendication 5, caractérisé en ce que les moyens à ressorts comprennent au moins un vérin pneumatique (15).

7. Remorque (1) selon la revendication 1, caractérisée par au moins un élément de blocage (22) qui peut être accouplé par de seconds moyens d'accouplement (23,24) à un objet à transporter.

8. Remorque (1) selon les revendications 1 et 5, caractérisée en ce que l'élément de blocage est un bras de blocage pivotant (22) qui agrippe l'objet à une certaine distance des moyens de levage (10), de façon que le mouvement d'inclinaison ou de bascule de l'objet (12) par rapport aux moyens de levage (10) soit empêché.

9. Remorque (1) selon la revendication 7, caractérisée en ce que les second moyens d'accouplement comprennent une pince en forme de U (23) destinée à coopérer avec une protubérance (25) prévue sur l'objet.

10. Remorque (1) selon la revendication 7, caractérisée en ce que le bras de blocage (22) coopère avec les moyens de levage (8,10,13,14,15) par l'intermédiaire d'un objet agrippé (12), de manière que l'objet (12) soit empêché de basculer ou de s'incliner dans toutes les positions des moyens de levage (8,10,13,14,15), et en ce que dans lesdites première et seconde positions des moyens de levage (8,10,13,14,15), l'objet (12) est respectivement posé sur le sol et placé en position de transport.

11. Conteneur (12) pour une remorque (1) selon l'une quelconque des revendications 1 à 10, comprenant deux protubérances de levage (11) placées en des positions correspondantes sur deux de ses côtés, de façon que les protubérances de levage (11) soient construites sous forme de broches élargies à leurs extrémités, caractérisé par au moins une protubérance de blocage (25) placée en une position qui lui permet de coopérer avec un élément de blocage prévu sur la remorque (1), laquelle protubérance de blocage (25) est construite sous la forme d'un ergot élargi.

12. Conteneur (12) selon la revendication 11, caractérisé en ce que le conteneur (12) est au moins partiellement construit en matière plastique.

13. Conteneur (12) selon la revendication 12, caractérisé en ce que la matière plastique est renforcée.

14. Conteneur (12) selon la revendication 11, ledit conteneur (12) étant localement renforcé par des nervures (32,33), caractérisé en ce que les protubérances de levage (11) sont placées sur des nervures de renforcement (32).

15. Conteneur (12) selon la revendication 11, caractérisé en ce que la protubérance de blocage (25) est placée sur une nervure de renforcement (33).

16. Association d'une remorque (1) et d'un conteneur (12) selon l'une quelconque des revendications 1 à 10 et l'une quelconque des revendications 11 à 15.
